# EUROPEAN PATENT SPECIFICATION

(11) **EP 3 027 938 B1**
(45) Date of publication and mention of the grant of the patent: **05.12.2018**
(21) Application number: 14766667.1
(22) Date of filing: 01.08.2014
(51) Int. Cl.: F16J 15/06, F01N 13/18

(54) **EGR SEAL WITH A SIEVE INSERT AND MANUFACTURING METHOD**
AGR-DICHTUNG MIT SIEBEINSATZ UND HERSTELLUNGSVERFAHREN
JOINT DE RECIRCULATION DES GAZ D'ÉCHAPPEMENT AVEC UN TAMIS ET PROCÉDÉ DE FABRICATION

(30) Priority: 01.08.2013 EP 13178968; 29.04.2014 DE 202014102014 U
(43) Date of publication of application: 08.06.2016
(73) Proprietor: ElringKlinger AG, 72581 Dettingen/Erms (DE)
(72) Inventor: HEDGES, Derek James, Saltburn by Sea Cleveland TS12 2JP (GB); ATTLEY, Lauren Elizabeth, Durham, DH7 8LT (GB); VEGA, Mariano, E-43005 Tarragona (ES); SCHÖLLHAMMER, Jochen, 72581 Dettingen (DE); RODRIGUEZ VILLADEN, Juan Rafael, E-43470 Selva del Camp (ES)
(74) Representative: Schmidt, Axel
(86) International application number: PCT/EP2014/066613
(87) International publication number: WO 2015/014992

(56) References cited:
- DE-A1- 10 212 236
- DE-U1-202006 004 489

## Description

The present invention relates to a seal with a sieve insert for an exhaust gas recirculation in the exhaust line of a motor vehicle that is driven by an internal combustion engine. The invention also relates to a production method for such an EGR seal with a sieve insert.

Document DE 102 12 236 A1 shows a seal with a sieve insert wherein the sieve seal has a sieve element (Figure 7, element 21) with a three-dimensional design in the form of an approximately cup-shaped curvature (33), which is fixed in the region of the sealing function.

It is also known from the prior art, among other things from DE 100 55 402 A1, to use sieve seals in transmissions in order to filter out coarse impurities from a hydraulic fluid. In exhaust gas recirculation, increasing use is being made of the low pressure circuit, with the exhaust being drawn from a point downstream of the soot particle filter. In order to prevent possible damage due to the entry, for example of flaking ceramic particles originating from a catalytic converter, in the flow of exhaust from an exhaust turbo charger or the combustion chambers of an internal combustion engine, a sieve seal is provided as a safeguard at a corresponding branch point of the exhaust line.

Sieves that have been used up to now for this purpose in the exhaust gas recirculation are characterized by means of a significant pressure loss. The object of the present invention, therefore, is to provide a remedy for this situation in the form of an improved sieve seal with reduced pressure loss and a corresponding production method.

This object is attained according to the invention by the features of claim 1 in that the sieve seal has a sieve part in the form of a sieve element with a three-dimensional design in the form of an approximately cup-shaped curvature, which is affixed in the region of the sealing function. The present invention is thus based on the knowledge that the significant pressure loss of known sieve seals is largely caused by a comparatively low effective cross-sectional area. The integration of a sieve into a seal requires a cross-sectional leak-tightness relative to the outside and requires the assurance of the filter function in the region of the connection. The mechanical connection of the functional position or seal on one hand side and the sieve, sieve body or sieve cloth on the other hand side ensures both functions. A three-dimensional design of the sieve increases the open cross-sectional area in comparison to known flat sieve elements and thus minimizes the pressure loss. The term "sieve cloth" is understood below to also mean knits or random layered structures such as fleeces, which all feature an outstanding heat resistance.

A corresponding production method according to claim 12 is based on the fact that an element composed of sieve cloth with an edge that is crimped over in a radially outward direction is deformed and inserted into a sealing element provided with a closed collar, with the edge of the element composed of mesh cloth encompasses the collar of the sealing element in such a way that at least a part of the edge embraces the collar from behind. During a pressing procedure, a part of the edge and the collar are permanently connected to each other by folding or cramping so that a fluid can pass this arrangement only by traveling through the sieve element. Alternatively, a sieve element having said characteristics in operation is produced by deep drawing a region that is perforated by means of lasing, etching, or punching and is connected to the seal.

Thus, in the invention, the permanent connection between the part of the edge of the seal and the collar of the sieve element is produced by means of crimping and/or bending. Alternatively, the sieve element is produced by deep drawing a region that is perforated by means of lasing, etching, or punching and is connected to the seal. This region that has been perforated in the preparatory steps can thus be composed of the material of the seal, which has not been cut out or punched out in a region through which subsequent flow will pass and therefore remains integrally and tightly joined to the seal.

Due to a cross-sectional leak-tightness that is significantly better by nature, instead of using a sieve cloth to produce a sieve element with a three-dimensional form, it is also possible to use a finely perforated sheet composed of metal or a heat resistant foil.

Advantageous modifications are the subject of the respective dependent claims. According to these, the sieve element is connected to a seal by means of a bead that is closed in the form of a ring or the connection of the seal to the sieve element is embodied by means of a transition of the seal into the sieve element, with the sieve element embodied in the form of a perforated or micro-perforated deep drawn component. Thus, as an alternative to the production of a sieve element as a separate part, a sieve element having said characteristics in operation is produced by deep drawing a region that is perforated by means of lasing, etching, or punching and is connected to the seal.

In an embodiment, the seal has at least one circularly closed plate extending concentrically around the bead. Further, in the transition from the seal to the bead, a flank extends at a slope angle α.

In a further embodiment, the cup-shaped sieve element can be conically or cylindrically shaped. Alternatively, the sieve element can be embodied as a cylindrical section that is closed at one free end, in particular by means of a circular piece of sieve cloth or by means of a compression and/or final closing of the sieve cloth by means of folding.

An embodiment of the invention that is advantageously optimized with regard to its volume features the fact that the sieve seal has a sieve part in the form of a sieve element with a three-dimensional design in the form of an approximately cup-shaped curvature with an edge region that is crimped over toward the outside, which is affixed by means of a clamping device in the region of the sealing function or seal equipped with a collar. This modification of the invention is thus based on the knowledge that an overall height and a resulting materials usage of devices can be reduced further in that a connection between the seal equipped with a collar and the edge region of the three-dimensionally formed sieve element, which region is crimped over toward the outside and across the collar of the seal, is produced by using a clamping device. This eliminates the need for known steps such as providing multiple folds of these components, which result in a multiplication of a material thickness. Such thickenings routinely take up space and incur increased production and materials costs. This also makes it possible to eliminate some of the different processing of a plurality of materials and components of a sieve seal. A component manufactured according to the invention thus particularly features a lower overall height and low radial width, reduced materials usage, and therefore a lower overall weight.

Building on this, in one embodiment of the invention, the clamping device is embodied as a retaining strap. A clamping device of this kind can be fixed in position as part of a widening of the internally situated sieve element and the collar of the seal, forming an essentially cylindrically shaped connecting region. By contrast with the embodiments cited at the beginning, this deformation can turn out to be comparatively small.

In the following, other features and advantages of embodiments according to the invention will be explained in greater detail with reference to exemplary embodiments shown in the drawings. In the schematic depictions of the drawings:
- Fig. 1:: shows a detail of an exhaust gas recirculation, not shown in detail, in the exhaust line of a motor vehicle, in a sectional side view;
- Fig. 2:: is a sectional side view of another embodiment of a sieve seal;
- Figs. 3a - 3e:: show details of a sectional side view to illustrate a production of a connection between the sieve element and seal of another embodiment of a sieve seal;
- Figs. 4a and 4b:: show a depiction of a production method for a connection between the sieve element and seal of another embodiment of a sieve seal analogous to the sequence of Figs. 3a - 3e;
- Figs. 5a - 5d:: show various views of another embodiment of a sieve seal;
- Figs. 6a - 6d:: show sectional side views of other embodiments of sieve seals with variation of a connecting region between the sieve element and the seal; and
- Figs. 7a - 7e:: show side views of other embodiments of sieve seals, each adapted to the respectively used clamping device in order to minimize the amount of space required, with depictions before and after a respective assembly.

Throughout the various drawings and exemplary embodiments, the same reference numerals are always used for the same elements.

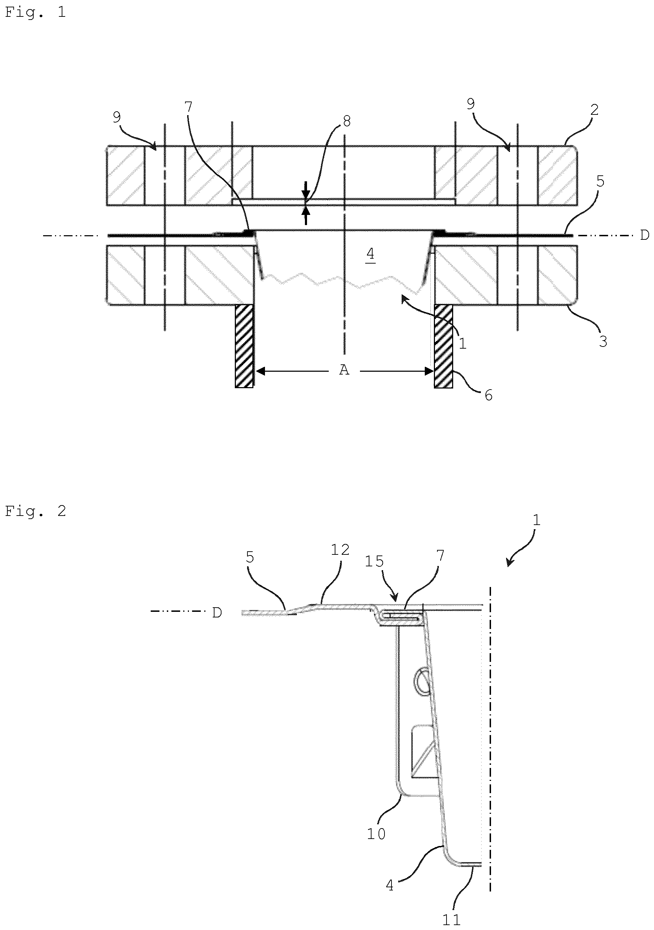

The sketch from Fig. 1 shows a detail of an exhaust gas recirculation, not shown in detail, in the exhaust line of a motor vehicle. In order to prevent a penetration of particles from the exhaust line via the exhaust gas recirculation e.g. into an exhaust turbo charger or an internal combustion engine, a sieve seal 1 is provided in a plane D for the performance of a sealing function between a first flange 2 and a second flange 3. The sieve seal 1 has a sieve element 4, which is only indicated here, with a three-dimensional design that will be explained in greater detail below. In the region of the sealing function, the sieve element 4 is affixed to a seal 5 so that gases can travel via a full free cross-sectional area A of a pipe 6 adjoining the flange 3, through the sieve 4. The attachment of the sieve element 4 to the seal 5 is carried out, for example, by means of a folding that will be described in greater detail below, which forms a bead 7 that is closed into a ring shape. In order not to impair the sealing function, in this exemplary embodiment, a radial recess 8 is provided on the first flange 2. This recess 8 is dimensioned in order to accommodate the bead 7 so that when fixing the flanges 2, 3 by means of recesses 9, the seal 5 undergoes a full compression by means of them.

Fig. 2 shows another embodiment of a sieve element 4 in a sectional side view. The sieve element 4 extends from the bead 7, tapering essentially in the shape of a truncated cone, into an end region 11, which in this instance is circular and is composed of the same sieve material as the casing of the truncated cone-shaped remaining part of the sieve element 4.

The sieve seal 1 is a basically rotationally symmetrical component, which in the present embodiment, has external projections 10 of the seal 5 that deviate from this rotational symmetry. The seal 5 also has a circular, closed plate 12 extending concentrically around the bead 7.

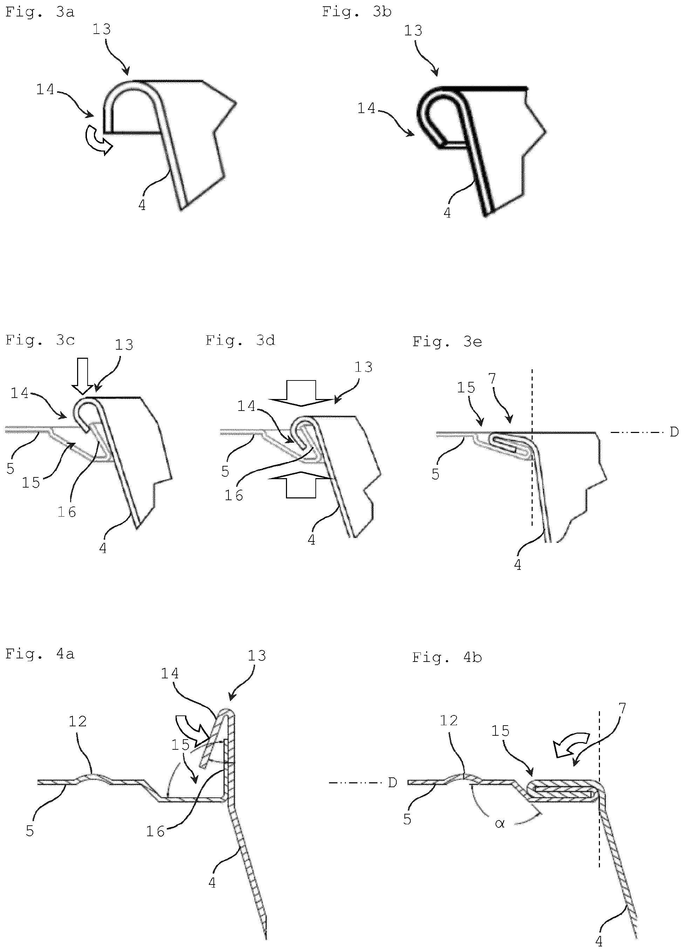

A method for producing a connection between the sieve element 4 and the seal 5 will be depicted in conjunction with the sequence of Figs 3a - 3e by means of details of a sectional side view of another embodiment of a sieve seal 1. In a first method step, a crimped-over edge 14 that extends radially outward is preformed onto the sieve element 4 at a free end region 13. Toward Fig. 3b, this edge 14 is being drawn so that it is further oriented inward. According to the sketch shown in Fig. 3c, the sieve element 4 is then inserted into the associated seal 5; the seal 5, which was essentially flat before with a circumferential swage 15 has been provided with a closed collar 16. The closed collar 16 of the seal 5 and the crimped-over edge 14 of the sieve element 4 are matched to each other so that the crimped-over edge partially embraces the collar 16 from behind. According to the depiction in Fig. 3c, the seal element is inserted so that the edge 14 of the element 4 composed of sieve cloth encompasses the collar 16 of the seal in such a way that at least part of the edge 14 embraces the collar 16 from behind and engages to a significant depth with the swage 15.

In Fig. 3d, the sieve element 4 is inserted in the above-described manner, all the way into the seal 5 so that in the direction of the arrow in Fig. 3c, no further movement along the arrow is possible. Next comes a step in which the arrangement composed of the crimped-over edge 14 and the collar 16 of the sieve element 4 is folded over by approximately 90°. As shown by the arrows depicted with dashed lines and facing in opposite directions in the depiction in Fig. 3d, a compression step then occurs. At the end of this step, the arrangement looks like the depiction shown in Fig. 3e: the seal 5 comes to an end in a remaining part of the swage 15 in which the bead 7 lies. Thanks to the sequence of parts of the seal 5 and sieve element 4 firmly joined to one another by folding, a fluid traveling through the sieve element 4 can flow through the arrangement on the other side of the dashed line. In the course of the final pressing procedure, therefore, a part of the edge 14 and of the collar 16 are permanently connected to each other by means of folding or cramping so that a fluid can pass through this arrangement only through the unoccupied part of the sieve element 4.

Fig. 4a shows details of a sectional side view to illustrate a production of a connection between the sieve element 4 and the seal 5 of another embodiment of a sieve seal 1 analogous to the sequence of Figs. 3a - 3e. By contrast with the embodiment described above, the collar 16 adjoining the swage 15 of the seal 5 protrudes at approximately right angles, see Fig. 4a. The free end region 13 of the sieve element 4 comes to an end in a region extending approximately parallel to the collar 16 and ends at a crimped-over edge 14 extending radially outward, which embraces the collar 16 from above and behind. In a first step, this edge 14 is placed against the collar 16. This arrangement is then folded over by almost 90° and is placed flat into the swage 15, see Fig. 4b. An angle α indicates a slope of a flank at the transition from the seal 5 to the bead 7 that is formed in this way.

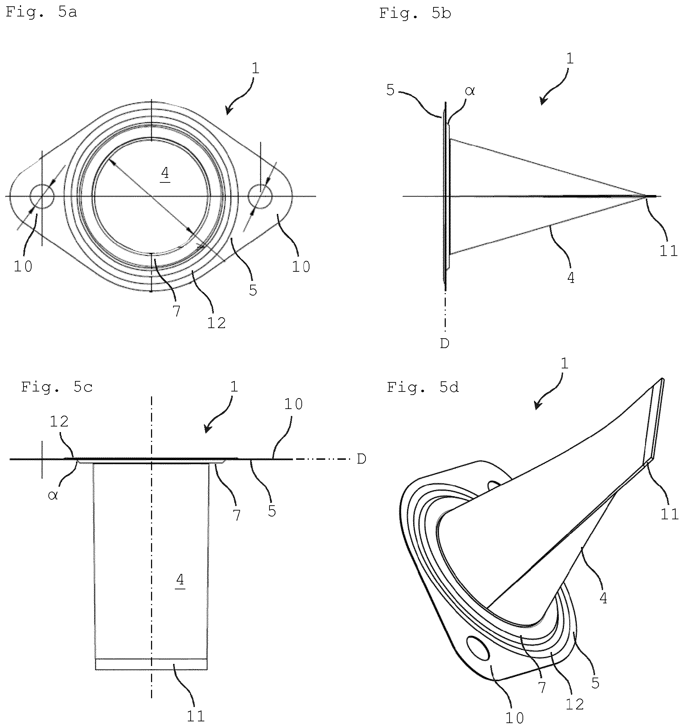

The sequence of Figs. 5a through 5d shows views of another embodiment of a sieve seal 1. This sieve seal 1 is axially symmetrical having two projections 10 situated on opposite sides, see Fig. 5a. Toward the sieve element 4, the projections 10 follow the seal 5 with a circularly enclosed plate 12 and the bead 7 as a connection between the seal 5 and the sieve element 4. The sieve element 4 tapers toward the end region 11 like a truncated cone, but in the end region 11, is compressed and closed in linear fashion, e.g. through folding, gluing, or a material connection like welding, brazing or soldering.

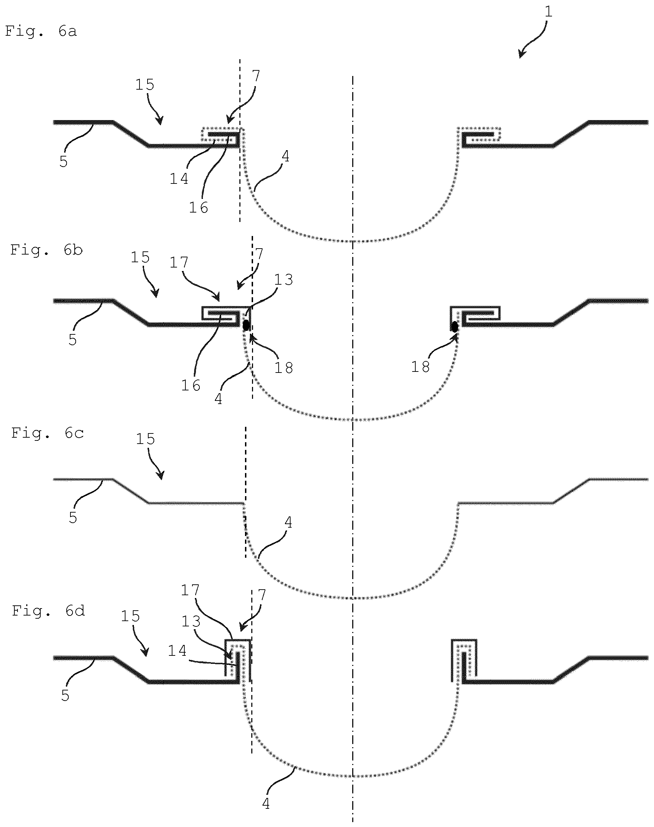

Figs. 6a - 6d show sectional side views of other embodiments of sieve seals 1. These embodiments differ with regard to the respective embodiment of the connecting region between the seal 5 and the sieve element 4; the exemplary embodiments described above essentially correspond to the sketch shown in Fig. 6a. For this reason, it is not addressed in further detail here. However, an important problem in sieve elements 4 composed of woven or braided fibers is to eliminate their lack of cross-sectional leak-tightness. In order to prevent leaks through the material of the sieve element 4 in the cross-sectional direction, the sieve element 4 together with a respective connection to the seal 5 must lie outside the region with the sealing function or must be enclosed by it in a sealed fashion.

In an alternative approach, the embodiment shown in Fig. 6b includes a clamping ring 17 that becomes part within the connection of the sieve element 4 to the seal 5. On the one hand, the clamping ring 17 is connected to the collar 16 of the seal 5 by means of folding and on the other hand, it is affixed to the free end region 13 of the sieve element 4 by means of a material connection like welding in the embodiment of Fig. 6b. Consequently, a welding edge 18 constitutes a transition from the sieve element 4 via the clamping ring 17 to the region of high cross-sectional leak-tightness so that a flow through the sieve seal 1 is only possible through the sieve element 4 on the other side of the welding edge 18.

The embodiment according to Fig. 6d also includes the use of a clamping ring 17 with the design of the bead 7. The clamping ring 17, however, overlaps the approximately perpendicularly protruding closed collar 16 of the seal 5 against which is pressed the edge 14 of the sieve element 4, which is crimped-over in a radially outward direction, thus fixing the latter.

The embodiment of Fig. 6c, however, discloses a solution in which a closed collar 16 on the seal 5 is omitted. The sieve element 4 is produced by deep drawing a region that is connected to the seal 5 or it is made from the inner part of the seal 5 that usually is cut away. This region is perforated by means of lasing, etching, or punching especially in a separate step. Thus, the connection of the seal 5 to the end region 13 of the sieve element 4 is embodied by means of a transition of the seal 5 into the sieve element 4, with the sieve element 4 embodied in the form of a perforated or micro-perforated deep drawn component having a very high cross-sectional leak-tightness in comparison to every sieve cloth.

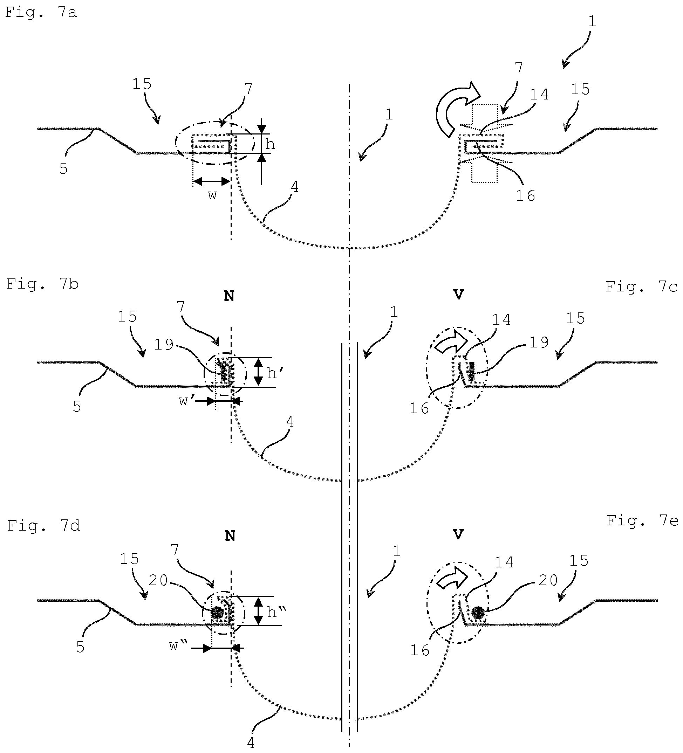

The sequence of Figs. 7a to 7e shows views of another embodiment of a sieve seal 1 with modifications according to the invention to reduce the amount of deforming work and the number of deforming steps and shows a height of a bead-like connecting region 7 as a connection between the seal 5 and sieve element 4 produced as separate parts.

While the image in Fig. 7a corresponds to that of Fig. 6a and shows an alternative design of the embodiment according to Figs. 2a and 2b with a cup-shaped sieve element 4, Figs. 7b - 7e show other embodiments of sieve seals 1 for direct comparison. These embodiments differ with regard to the respective embodiment of the connecting region between the seal 5 and the sieve element 4; all of the above-described sieve seals 1 essentially correspond to the sketch in Fig. 7a. For this reason, they are not discussed again. In sieve seals 1 of the above-described type, the large number of different production steps for producing a durable bead 7 as a connection between the seal 5 and sieve element 4 and its height h and radial width w of this bead due to the multiple layers of material can turn out to be disadvantageous. A swage 15 in the seal 5 and also a recess 8 in a first flange 2 must be correspondingly dimensioned in order to be able to also provide for an appropriate leak-tightness of the overall arrangement. As alternatives to the design shown in Fig. 7a, the depictions in Figs. 7b to 7e show exemplary embodiments of the invention in which a permanent connection between the closed collar 16 on the seal 5 and the respective sieve element 4 is produced by means of a clamping device instead of by using a clamping ring that overlaps the bead 7 or by means of multiple folding. To that end, in a preparation step labeled with the letter V, the sieve element 4 with an edge 14 that is crimped over toward the outside is inserted through the seal 5 until the crimped-over edge 14 engages behind or at least encompasses the collar 16. Then a clamping device, in this case embodied in the form of a retaining strap 19, is installed, which is fixed in position by means of a subsequent widening of the collar 16 along the indicating arrow. This widening can, for example, be produced by a spreading action exerted when a truncated cone is pushed in. Consequently, the sieve element 4 is simultaneously connected to the seal 5 permanently. This eliminates the need for at least one production step as compared to a production method described above.

In this case, a height h' that is indicated in the drawings, which are not to scale, can easily be set to be less than the height h in Fig. 7a. In any case, though, a width w' of the bead 7 is significantly less than the radial width w from Fig. 7a, if only because of the small number of material layers.

A corresponding modification for reducing a height to a dimension h" while approximately maintaining a width w' as w" can be achieved through the use of a clamping ring 20. The ring 20 can have a reduced height in comparison to the retaining strap 19 while having the same mechanical strength. This makes a significant contribution to a reduced overall height of the final connection in the form of the bead 7.

### Reference Numeral List

- 1: sieve seal
- 2: first flange
- 3: second flange
- 4: sieve element
- 5: seal
- 6: pipe
- 7: bead
- 8: recess in first flange 2
- 9: recess
- 10: projection
- 11: end region of the sieve element 4
- 12: circular closed plate
- 13: free end region of the sieve element 4
- 14: edge of the sieve element 4, crimped-over in a radially outward direction
- 15: swage in the seal 5
- 16: closed collar on the seal 5
- 17: clamping ring
- 18: welding edge
- 19: retaining strap
- 20: clamping ring

- A: free cross-sectional area
- D: plane of the sealing function
- h: height of the bead 7
- h': height of the bead 7
- h": height of the bead 7
- w: radial width of the bead 7
- w': radial width of the bead 7
- w": radial width of the bead 7
- α: flank angle of the radially extending swage 15 of the seal 5
- V: beforehand / preparation
- N: afterward / state after a widening

## Claims

1. A seal (5) with a sieve (4) insert for an exhaust gas recirculation in the exhaust line of a motor vehicle that is driven by an internal combustion engine,
where the sieve seal (1) has a sieve element (4) with a three- dimensional design in the form of a cup-shaped curvature, which is fixed in a closed region on the seal (5),
**characterized in that**
a part of an edge (14) of the sieve element (4) and of a collar (16) of the seal (5) are permanently connected to each other by means of folding or cramping so that a fluid can pass only through the unoccupied part of the sieve element (4).

2. The seal according to the preceding claim, **characterized in that** the sieve element (4) is connected to the seal (5) by means of a bead (7) that is closed in the form of a ring.

3. The seal according to the one of the preceding claims, **characterized in that** the seal (5) has at least one circularly closed plate (12) extending concentrically around the bead (7).

4. The seal according to the preceding claim, **characterized in that** in the transition from the seal (5) to the bead (7), a flank extends at a slope angle (α).

5. The seal according to the one of the preceding claims, **characterized in that** the sieve element (4) is symmetrically embodied and in particular, is conically or cylindrically embodied.

6. The seal according to the one of the preceding claims, **characterized in that** the sieve element (4) is embodied as a cylindrical section that has an end region (11) adjoining a free end.

7. The seal according to the preceding claim, **characterized in that** the sieve element (4) is closed by means of a circular piece of sieve cloth or through compression and/or folding of the sieve cloth.

8. The seal according to the one of the preceding claims, **characterized in that** the seal (5) has external projections (10).

9. The seal according to one of the preceding claims, **characterized in that** the edge (14) that is crimped over in an outward direction, which is affixed by means of a clamping device (19, 20) in the region of the seal (5) equipped with the collar (16).

10. The seal according to the preceding claim, **characterized in that** the clamping device (19, 20) can be fixed in position as part of a widening of the internally situated sieve element (4) and the collar (16) of the seal (5) against the clamping device (19, 20), forming an essentially cylindrically shaped connecting region.

11. The seal according to the preceding claim, **characterized in that** the clamping device is embodied in the form of a retaining strap (19) or clamping ring (20).

12. The seal according to claim 1, **characterized in that** the sieve seal (1) further comprising a clamping ring (17) connected to the collar (16) of the seal (5) by means of folding and affixed to the free end region (13) of the sieve element (4) by means of a material connection.

13. The seal according to claim 1, **characterized in that** the sieve seal (1) further comprising a clamping ring (17) overlapping the perpendicularly protruding closed collar (16) of the seal (5) against which is pressed the edge (14) of the sieve element (4), which is crimped-over in a radially outward direction.

14. A method for producing a seal according to any preceding claim 1 to 13 with a sieve insert for an exhaust gas recirculation in the exhaust line of a motor vehicle, **characterized in that** an element composed of sieve cloth with a three-dimensional design and an edge (14) that is crimped-over in a radially outward direction is preformed and
is inserted into a seal (5) provided with a closed collar (16) ;
the edge (14) of the sieve element (4) is inserted so that it overlaps the collar (16) of the seal element in such a way that at least part of the edge (14) embraces the collar (16) from behind and then, by means of a pressing procedure, a part of the edge (14) and of the collar (16) are permanently joined to each other by folding so that a fluid can pass through this sieve seal (1) only by passing through the sieve element (4),
or the sieve element (4) is produced by means of deep drawing of a region that is perforated by means of lasing, etching, or punching and the region is connected to the seal (5).

15. The method according to the preceding claim, **characterized in that** the permanent connection between the part of the edge (14) of the seal (5) and the collar (16) of the sieve element (4) is produced by means of pressing, crimping, and/or bending.

16. The method according to the preceding claim, **characterized in that** the permanent connection between the part of the edge (14) of the seal (5) and the collar (16) of the sieve element (4) is produced by installing a clamping device **in that** the sieve element (4) with an edge (14) that is crimped over toward the outside is inserted through the seal (5) until the crimped-over edge (14) engages behind or at least encompasses the collar (16) and then a clamping device, for example embodied in the form of a retaining strap (19) or clamping ring (20), is installed so that the clamping device is fixed in position by means of a subsequent widening of the collar (16), which widening is produced, for example, by a spreading action exerted when a truncated cone is pushed in.

## Patentansprüche

1. Dichtung (5) mit einem Siebeinsatz (4) für eine Abgasrückführung in dem Abgasstrang eines Kraftfahrzeuges, das mit einer Verbrennungskraftmaschine angetrieben ist, wobei die Siebdichtung (1) einen Siebkörper (4) mit einer dreidimensionalen Gestaltung in Form einer napfartigen Wölbung aufweist, die in einem geschlossenen Bereich an der Dichtung (5) fixiert ist,
**dadurch gekennzeichnet, dass**
ein Teil eines Randes (14) des Siebkörpers (4) und eines Kragens (16) der Dichtung (5) durch Falten oder Einklemmen fest miteinander verbunden sind, so dass ein Fluid nur durch den unbesetzten Teil des Siebkörpers (4) hindurchtreten kann.

2. Dichtung nach vorstehendem Anspruch, **dadurch gekennzeichnet, dass** der Siebkörper (4) mit einer Dichtung (5) durch eine ringförmig geschlossene Wulst (7) verbunden ist.

3. Dichtung nach einem der vorstehenden Ansprüche, **dadurch gekennzeichnet, dass** die Dichtung (5) mindestens eine kreisförmig geschlossene Lamelle (12) aufweist, die sich konzentrisch um die Wulst (7) erstreckt.

4. Dichtung nach vorstehendem Anspruch, **dadurch gekennzeichnet, dass** sich im Übergang von der Dichtung (5) zur Sicke (7) eine Flanke in einem Neigungswinkel (α) erstreckt.

5. Dichtung nach einem der vorstehenden Ansprüche, **dadurch gekennzeichnet, dass** der Siebkörper (4) symmetrisch ausgebildet und insbesondere konisch oder zylindrisch ausgebildet ist.

6. Dichtung nach einem der vorstehenden Ansprüche, **dadurch gekennzeichnet, dass** der Siebkörper (4) als zylindrischer Abschnitt ausgebildet ist, der einen an ein freies Ende anschließenden Endbereich (11) aufweist.

7. Dichtung nach vorstehendem Anspruch, **dadurch gekennzeichnet, dass** der Siebkörper (4) mittels eines kreisförmigen Siebgewebes oder durch Zusammendrücken und/oder Falten des Siebgewebes verschlossen ist.

8. Dichtung nach einem der vorstehenden Ansprüche, **dadurch gekennzeichnet, dass** die Dichtung (5) äußere Vorsprünge (10) aufweist.

9. Dichtung nach einem der vorstehenden Ansprüche, **dadurch gekennzeichnet, dass** der nach außen umgebördelte Rand (14) mittels einer Klemmvorrichtung (19, 20) im Bereich der mit dem Kragen (16) versehenen Dichtung (5) befestigt ist.

10. Dichtung nach vorstehendem Anspruch, **dadurch gekennzeichnet, dass** die Klemmvorrichtung (19, 20) im Rahmen einer Verbreiterung des innenliegenden Siebkörpers (4) und des Kragens (16) der Dichtung (5) gegen die Klemmvorrichtung (19, 20) fixierbar ist und einen im Wesentlichen zylindrisch geformten Verbindungsbereich bildet.

11. Dichtung nach vorstehendem Anspruch, **dadurch gekennzeichnet, dass** die Klemmvorrichtung als Halteband (19) oder Klemmring (20) ausgebildet ist.

12. Dichtung nach vorstehendem Anspruch, **dadurch gekennzeichnet, dass** die Siebdichtung (1) ferner einen Klemmring (17) umfasst, der mit dem Kragen (16) der Dichtung (5) durch Falten verbunden und über eine Materialverbindung an einem freien Endbereich (13) des Siebelements (4) befestigt ist.

13. Dichtung nach vorstehendem Anspruch, **dadurch gekennzeichnet, dass** die Siebdichtung (1) ferner einen Klemmring (17) umfasst, der den senkrecht vorstehenden geschlossenen Kragen (16) der Dichtung (5) überlappt, gegen den die Kante (14) des Siebelements (4) gedrückt wird, die in radialer Richtung nach außen überkrimpt ist.

14. Verfahren zur Herstellung einer Dichtung nach einem der vorstehenden Ansprüche 1 bis 13 mit einem Siebeinsatz für eine Abgasrückführung in der Abgasstrang eines Kraftfahrzeugs, **dadurch gekennzeichnet, dass** ein Element aus Siebgewebe mit dreidimensionaler Gestaltung und einem radial nach außen umgebördelten Rand (14) vorgeformt wird und
in eine mit einem geschlossenen Kragen (16) versehene Dichtung (5) eingesetzt wird;
der Rand (14) des Siebkörpers (4) so eingesetzt ist, dass er den Kragen (16) des Dichtelements derart überlappt, dass zumindest ein Teil des Randes (14) den Kragen (16) von hinten umgreift und dann mittels eines Pressvorgangs ein Teil des Randes (14) und des Kragens (16) durch Falten dauerhaft miteinander verbunden sind, so dass ein Fluid durch diese Siebdichtung (1) nur durch den Siebkörper (4) hindurchtreten kann,
oder der Siebkörper (4) durch Tiefziehen eines durch Lasern, Ätzen oder Stanzen perforierten Bereichs hergestellt wird und der Bereich mit der Dichtung (5) verbunden ist.

15. Verfahren nach dem vorstehenden Anspruch, **dadurch gekennzeichnet, dass** die dauerhafte Verbindung zwischen dem Teil des Randes (14) der Dichtung (5) und dem Kragen (16) des Siebkörpers (4) durch Pressen, Bördeln und/oder Biegen hergestellt wird.

16. Verfahren nach dem vorstehenden Anspruch, **dadurch gekennzeichnet, dass** die dauerhafte Verbindung zwischen dem Teil des Randes (14) der Dichtung (5) und dem Kragen (16) des Siebkörpers (4) durch Aufsetzen eines Spannmittels hergestellt wird, indem der Siebkörper (4) mit einem nach außen umgebördelten Rand (14) durch die Dichtung (5) soweit eingeführt wird, dass der umgebördelte Rand (14) den Kragen (16) hintergreift oder zumindest umgreift und dann ein Spannmittel z.B. in Form eines Spannbandes (19) oder Spannrings (20) so aufgesetzt wird, dass das Spannmittel durch eine nachfolgende Weitung des Kragens (16) fixiert wird, wobei diese Weitung z.B. durch eine Spreizung mittels eines eingedrückten Kegelstumpfes erfolgt.

## Revendications

1. Joint d'étanchéité (5) muni d'un tamis (4) pour la recirculation des gaz d'échappement dans la ligne d'échappement d'un véhicule automobile entraîné par un moteur à combustion interne,
le joint à tamis (1) ayant un corps de tamis (4) présentant une configuration tridimensionnelle sous la forme d'un bombement en forme de cuvette, qui est fixé dans une zone fermée sur le joint d'étanchéité (5),
**caractérisé en ce que**
une partie d'un bord (14) du corps de tamis (4) et d'une collerette (16) du joint d'étanchéité (5) sont fermement reliées l'une à l'autre par pliage ou par pincement, de sorte qu'un fluide ne peut traverser que la partie inoccupée du corps de tamis (4).

2. Joint d'étanchéité selon la revendication précédente, **caractérisé en ce que** le corps de tamis (4) est relié à un joint d'étanchéité (5) par un bourrelet (7) fermé en forme annulaire.

3. Joint d'étanchéité selon l'une des revendications précédentes, **caractérisé en ce que** le joint d'étanchéité (5) comprend au moins une plaque (12) fermée en forme circulaire qui s'étend concentriquement autour du bourrelet (7) .

4. Joint d'étanchéité selon la revendication précédente, **caractérisé en ce qu'**un flanc s'étend sous un angle d'inclinaison (α) au niveau de la transition du joint d'étanchéité (5) vers le bourrelet (7).

5. Joint d'étanchéité selon l'une des revendications précédentes, **caractérisé en ce que** le corps de tamis (4) est réalisé à symétrie et est réalisé en particulier conique ou cylindrique.

6. Joint d'étanchéité selon l'une des revendications précédentes, **caractérisé en ce que** le corps de tamis (4) est réalisé en tant que portion cylindrique qui présente une zone d'extrémité (11) qui se raccorde à une extrémité libre.

7. Joint d'étanchéité selon la revendication précédente, **caractérisé en ce que** le corps de tamis (4) est fermé au moyen d'un tissu de tamisage circulaire ou par compression et/ou pliage du tissu de tamisage.

8. Joint d'étanchéité selon l'une des revendications précédentes, **caractérisé en ce que** le joint d'étanchéité (5) présente des saillies extérieures (10).

9. Joint d'étanchéité selon l'une des revendications précédentes, **caractérisé en ce que** le bord (14) rabattu vers l'extérieur est fixé au niveau du joint d'étanchéité (5) pourvu de la collerette (16) au moyen d'un dispositif de pincement (19, 20).

10. Joint d'étanchéité selon la revendication précédente, **caractérisé en ce que** le dispositif de pincement (19, 20) est susceptible d'être fixé contre le dispositif de pincement (19, 20) dans le cadre d'un élargissement du corps de tamis intérieur (4) et de la collerette (16) du joint d'étanchéité (5) et constitue une zone de liaison de forme sensiblement cylindrique.

11. Joint d'étanchéité selon la revendication précédente, **caractérisé en ce que** le dispositif de pincement est réalisé en tant que ruban de retenue (19) ou d'anneau de pincement (20).

12. Joint d'étanchéité selon la revendication 1, **caractérisé en ce que** le joint à tamis (1) comprend en outre une bague de serrage (17) reliée au collet (16) du joint d'étanchéité (5) par pliage et fixée à une zone d'extrémité libre (13) de l'élément tamis (4) par une liaison en matériau.

13. Joint d'étanchéité selon la revendication 1, **caractérisé en ce que** le joint de tamisage (1) comprend en outre une bague de serrage (17) chevauchant la collerette fermée (16) du joint d'étanchéité (5) faisant saillie perpendiculairement contre laquelle est pressé le bord (14) de l'élément tamis (4), qui est serti dans une direction radialement extérieure.

14. Procédé de réalisation d'un joint d'étanchéité selon l'une quelconque des revendications précédentes 1 à 13, muni d'un tamis pour la recirculation des gaz d'échappement dans la ligne d'échappement d'un véhicule automobile,
**caractérisé en ce qu'**un élément en tissu de tamisage présentant une configuration tridimensionnelle et pourvu d'un bord (14) rabattu radialement vers l'extérieur est préformé et mis en place dans un joint d'étanchéité (5) muni d'une collerette fermée (16) ;
le bord (14) du corps de tamis (4) est mis en place de manière à chevaucher la collerette (16) de l'élément d'étanchéité de telle sorte qu'une partie au moins du bord (14) entoure par l'arrière la collerette (16) et qu'une partie du bord (14) et de la collerette (16) sont alors reliées de façon permanente l'une à l'autre par pliage au moyen d'une opération de pressage, de sorte qu'un fluide ne peut traverser ce joint à tamis (1) que par le corps de tamis (4),
ou le corps de tamis (4) est réalisé par emboutissage profond d'une zone perforée par laser, par attaque chimique ou par poinçonnage, et ladite zone est reliée au joint d'étanchéité (5).

15. Procédé selon la revendication précédente, **caractérisé en ce que** la liaison permanente entre la partie du bord (14) du joint d'étanchéité (5) et la collerette (16) du corps de tamis (4) est établie par pressage, par sertissage et/ou par cintrage.

16. Procédé selon la revendication précédente, **caractérisé en ce que** la liaison permanente entre la partie du bord (14) du joint d'étanchéité (5) et la collerette (16) du corps de tamis (4) est établie par application d'un moyen de serrage du fait que le corps de tamis (4) pourvu d'un bord (14) rabattu vers l'extérieur est introduit à travers le joint d'étanchéité (5) aussi loin que le bord rabattu (14) engage par l'arrière la collerette (16) ou l'entoure au moins, et qu'un moyen de serrage par exemple sous la forme d'un ruban de serrage (19) ou d'un anneau de serrage (20) est alors appliqué de telle sorte que le moyen de serrage est fixé par un évasement successif de la collerette (16), cet évasement ayant lieu par exemple par un écartement au moyen d'un tronc de cône enfoncé.
